# EUROPÄISCHE PATENTANMELDUNG

(11) **EP 1 821 090 A2**
(43) Veröffentlichungstag der Anmeldung: **22.08.2007**
(21) Anmeldenummer: 07002041.7
(22) Anmeldetag: 31.01.2007
(51) Int. Cl.: G01L 5/13, G01L 1/22

(54) **Kraftsensor und Herstellungsverfahren für einen Kraftsensor**

(30) Priorität: 17.02.2006 DE 102006007385
(71) Anmelder: ROBERT BOSCH GMBH, 70442 Stuttgart (DE)
(72) Erfinder: Steprath, Werner, 41542 Dormagen (DE); Dreyling, Judith, 71701 Schwieberdingen (DE); Thierbach, Peter, 71634 Ludwigsburg (DE); Bartels, Olaf, 74321 Bietigheim-Bissingen (DE)

(57) **Zusammenfassung**

Ein Kraftsensor besitzt ein zylinderförmiges Gehäuse, das durch eine senkrecht zu seiner Mittelachse auf es einwirkende Kraft elastisch verformbar ist. Das Gehäuse weist einen Hohlraum auf. In dem Hohlraum ist eine Messwandleranordnung angeordnet, mit der die Verformung des Gehäuses erfassbar ist. Die Messwandleranordnung weist eine scheibenförmige Trägerplatte auf, auf deren Oberfläche ein Dehnmesswandler befestigt ist. Die Trägerplatte ist so im Hohlraum befestigt, dass sich eine Verformung des Gehäuses auf die TrägerPlatte überträgt.

## Beschreibung

Die Erfindung betrifft einen Kraftsensor gemäß dem Oberbegriff des Patentanspruchs 1.

Der gattungsgemäße Kraftsensor kommt z.B. an Ackerschleppern zum Einsatz. Er dient dort als Gelenkbolzen zur Befestigung des Unterlenkers am Ackerschlepper und misst eine auf den Unterlenker einwirkende Zug- oder Schubkraft. Weitere Einsatzgebiete sind z.B. Lastmessungen in Heuballenpressen oder Hubstaplern. Einen solchen herkömmlichen Kraftmessbolzen beschreibt die DE 30 04 952 A1. Der Kraftmessbolzen besitzt ein hohlzylinderförmiges Gehäuse. In die stirnseitige Gehäuseöffnung ist ein magnetischer Messwandler eingesetzt, der eine mechanische Belastung des Gehäuses erfasst. Der magnetische Messwandler ist mit einer Primärspule und zwei Sekundärspulen ausgestattet und misst eine sich unter Schub- oder Zugspannung ändernde Magnetoelastizität des Gehäusematerials.

Ein solcher herkömmlicher Kraftsensor arbeitet zuverlässig, er ist jedoch aufwendig und teuer in der Herstellung.

Es ist die Aufgabe der vorliegenden Erfindung, einen einfach aufgebauten und kostengünstig herstellbaren Kraftsensor anzugeben, der insbesondere als Gelenkbolzen einsetzbar ist.

Diese Aufgabe wird durch eine Kraftsensor mit den Merkmalen des Patentanspruchs 1 gelöst. Die Aufgabe wird ferner durch das in Patentanspruch 19 dargestellte Herstellungsverfahren für einen Kraftsensor gelöst.

Der erfindungsgemäße Kraftsensor besitzt ein zylinderförmiges Gehäuse, das durch eine senkrecht zu seiner Mittelachse auf es einwirkende Kraft elastisch verformbar ist. Das Gehäuse weist einen Hohlraum auf. In dem Hohlraum ist eine Messwandleranordnung angeordnet, mit der die Verformung des Gehäuses erfassbar ist.

Die Besonderheit der vorliegenden Erfindung ist es, dass die Mesäwandleranordnung eine scheibenförmige Trägerplatte aufweist, auf deren Oberfläche ein Dehnmesswandler befestigt ist, und dass die Trägerplatte so im Hohlraum befestigt ist, dass sich eine Verformung des Gehäuses auf die Trägerplatte überträgt.

Der erfindungsgemäße Kraftsensor ist zuverlässig und außerdem besonders einfach herstellbar. Dehnmesswandler sind erprobte Messwandler für mechanische Verformungen. Durch das Befestigen des Dehnmesswandlers auf einer Trägerplatte lässt sich dieser besonders einfach mit wenig Montageaufwand in einem Gehäusehohlraum des Kraftsensors anordnen. Die Trägerplatte im Hohlraum zu befestigen ist z.B. wesentlich einfacher, als den Dehnmesswandler direkt auf einer Gehäuseinnenwand zu befestigen. Die Trägerplatte erlaubt es zudem, den Dehnmesswandler in einer für die gewünschte Kraftmessrichtung optimalen Position und Ausrichtung im Hohlraum anzuordnen, ohne einen kompliziert gestalteten Hohlraum zu erfordern. Am Kraftsensor kann ein begrenzter Längsabschnitt als Erfassungsabschnitt für Scherkräfte vorgesehen werden. Außerdem überträgt die Trägerplatte die mechanische Verformung des Gehäuses richtungsselektiv auf den Dehnmesswandler, so dass eine bevorzugte Kraftmessrichtung vorgebbar ist. Somit werden Störeinwirkungen vermindert. Die Trägerplatte selbst lässt sich sehr einfach z.B. als Blech-Stanzteil fertigen. Durch die Anordnung im Hohlraum ist der Dehnmesswandler zudem gut gegen Verschmutzung geschützt.

Gemäß einem weiteren Aspekt der vorliegenden Erfindung wird bei der Herstellung des Kraftsensors die Trägerplatte mit Übermaß zu dem Hohlraum angefertigt. Die Trägerplatte wird in dem Hohlraum dadurch befestigt, dass der Hohlraum in einer Richtung senkrecht zur Mittelachse des Gehäuses durch äußere Krafteinwirkung elastisch aufgeweitet wird, dass die Trägerplatte in den aufgeweiteten Hohlraum eingesetzt wird und dass bei Entspannung des Hohlraums die Trägerplatte im Hohlraum eingeklemmt wird. Dadurch ergibt sich eine besonders einfache und beständige Befestigung der Trägerplatte im Hohlraum.

Vorteilhafte Ausgestaltungen der vorliegenden Erfindung sind in den Unteransprüchen angegeben.

Gemäß einer bevorzugten Ausführungsform weist die Trägerplatte einen Rand auf, an dem sie kraftschlüssig und/oder formschlüssig mit einer Innenwand des Hohlraums verbunden ist. Diese einfache Konstruktion erlaubt es, durch Scherkräfte am Gehäuse hervorgerufene Zug- oder Schubspannungen auf die Trägerplatte zu übertragen und an ihrer Oberfläche messen. Es findet außerdem eine ausgeprägte Richtungsselektion statt, da Scherkräfte, die parallel zur Oberfläche der Trägerplatte gerichtet sind, eine deutlich höhere mechanische Spannung auf der Oberfläche der Trägerplatte auslösen, als solche, die senkrecht zur Oberfläche der Trägerplatte gerichtet sind.

Eine besonders einfache und zuverlässige Befestigung der Trägerplatte im Hohlraum erzielt man, wenn die Trägerplatte im Hohlraum zwischen gegenüberliegenden Abschnitten der Innenwand eingeklemmt ist. Diese Befestigungsart gewährleistet eine gute Einkopplung von mechanischen Spannungen über den Rand der Trägerplatte.

Eine zuverlässige Befestigung der Trägerplatte und eine gute Einkopplung der Spannung kann jedoch auch dadurch erfolgen, dass ein Randabschnitt der Trägerplatte mit der Innenwand des Hohlraums verklebt, verlötet oder verschweißt ist.

Die Einkopplung einer parallel zur Oberfläche der Trägerplatte einwirkenden Scherkraft auf die Trägerplatte ist weiter optimiert, wenn die Oberfläche der Trägerplatte parallel zu der Mittelachse des Gehäuses ausgerichtet ist und die Mittelachse durch stirnseitige Randflächen der Trägerplatte verläuft.

In einer Anordnung, in der der Dehnmesswandler in einem Winkel von 45° zur Mittelachse des zylinderförmigen Gehäuses angeordnet ist, ist ein besonders hoher Signalhub des Messsignals zu erwarten, da durch Scherkräfte hervorgerufene Schubspannungen sich in einer Längung oder Stauchung einer Diagonallinie des verformten Zylinderabschnitts äußern.

Um Störsignale zu verringern, ist der der Dehnmesswandler vorzugsweise im Bereich einer hinsichtlich einer Biegung des Gehäuses neutralen Faser gehalten.

Gemäß einer bevorzugten Ausgestaltung ist durch einen Zapfen an der Trägerplatte und durch eine den Zapfen aufnehmende Ausbuchtung im Gehäuse eine Winkellage der Trägerplatte im Gehäuse eindeutig vorgegeben. Auf diese Weise ist die lagegerechte Montage der Trägerplatte sichergestellt. Somit kann eine Kraftmessrichtung vorab festgelegt und durch eine äußere Gestaltung des Gehäuses, z.B. eine äußere Verdrehsicherung, vorgegeben werden.

Weitere Ausgestaltungen vereinfachen die Herstellung erheblich. So besitzt vorzugsweise der Hohlraum die Form einer von einer Stirnfläche des zylinderförmigen Gehäuses ausgehenden, entlang der Mittelachse ausgeführten Sacklochbohrung oder Durchgangsbohrung. Darüber hinaus ist es vorteilhaft, wenn die Messwandleranordnung einen Stopfen zum Einsetzen in die Aufnahmebohrung, d.h. die Sacklochbohrung oder Durchgangsbohrung, aufweist, an dem die Trägerplatte in Form einer vorstehenden Zunge angesetzt ist. Dadurch kann die Trägerplatte in einem Arbeitsgang zusammen mit einem Stopfen zum Verschließen der Aufnahmebohrung montiert werden. Bei einer Sacklochbohrung sind keine weiteren Arbeitsschritte zum Verschließen der Aufnahmebohrung mehr notwendig. Die vormontierte Baueinheit aus Stopfen und Trägerplatte ist zudem einfach und effizient handhabbar. Zudem kann in dem Stopfen eine Elektronik zur Auswertung eines Signals des Dehnmesswandlers angeordnet sein. Dadurch erhält man eine kompakte Messwandlereinheit, die einfach zu montieren ist, und die stabile, fahrzeuggerechte Messsignale liefert. Wenn am Stopfen oder durch eine Stufe in der Aufnahmebohrung ein Anschlag hinsichtlich der Einsetztiefe des Stopfens bzw. der Trägerplatte gebildet ist, lässt sich ein Längsabschnitt des Kraftsensors, in dem Scherkräfte erfassbar sind, reproduzierbar festlegen und somit eine Exemplarstreuung in der Fertigung eliminieren.

Ein besonders einfach zu fertigender Kraftsensor zeichnet sich dadurch aus, dass die Trägerplatte im wesentlichen die Form einer rechteckigen Scheibe aufweist und an ihren parallel zur Mittelachse des Gehäuses verlaufenden Längskanten mit der Innenwand der Sacklochbohrung bzw. der Innenwand der Durchgangsbohrung verbunden ist. Bei diesem Aufbau ist der Erfassungsbereich für Scherkräfte auf einen kurzen Längsabschnitt des Gehäuses, in dem auch der Dehnmesswandler angeordnet ist, begrenzt. Dadurch können Störeinflüsse vermindert werden.

Gemäß einer besonders bevorzugten Ausgestaltung weist die Trägerplatte in einem Bereich, in dem der Dehnmesswandler angeordnet ist, eine Verjüngung in ihrer Breite auf, so dass im Bereich der Verjüngung ein Spalt zwischen den Längskanten und der Innenwand der Sacklochbohrung bzw. der Innenwand der Durchgangsbohrung besteht. Dadurch lassen sich Schubspannungen bzw. eine durch Schubspannungen ausgelöste diagonale Längung der Trägerplatte auf den Bereich, in dem der Dehnmesswandler befestigt ist, konzentrieren. Somit verbessert sich der Signalhub. Des weiteren besitzt der Kraftsensor einen etwas breiteren Erfassungsabschnitt für Scherkräfte. Die Breite des Erfassungsabschnitts ist durch die Länge des verjüngten Abschnitts einstellbar.

Wenn innerhalb einer Schermesszone der Trägerplatte zwei nach Art einer Halbbrücke verschaltete Dehnmessstreifen senkrecht zueinander angeordnet sind, lassen sich untere anderem Störeffekte, die auf Temperaturschwankungen beruhen, sowie Scherkräfte senkrecht zur Oberfläche der Trägerplatte kompensieren.

Gemäß einer weiteren bevorzugten Ausgestaltung sind innerhalb einer Schermesszone der Trägerplatte vier nach Art einer Vollbrücke verschaltete Dehnmessstreifen paarweise auf gegenüberliegenden Oberflächen der Trägerplatte senkrecht zueinander angeordnet. Mit dieser Anordnung erhält man eine höhere Signalamplitude und es lassen sich auch Torsionsspannungen kompensieren.

Eine weitere vorteilhafte Ausgestaltung sieht vor, dass innerhalb zweier in Längsrichtung des Gehäuses beabstandeter Schermesszonen jeweils zwei Dehnmessstreifen senkrecht zueinander angeordnet sind, und dass diese vier Dehnmessstreifen in einer Vollbrücke so verschaltet sind, dass sich in den zwei Schermesszonen erfasste Scherkräfte addieren, sofern sie gleichgerichtet sind. Dies erlaubt es, bei einem zweiseitig gelagerten Bolzen die Summe der an beiden Lagerbohrungen auftretenden Kräfte zu erfassen. Eine durch Verschleiß der Lager eventuell asymmetrische ausfallende Lastverteilung führt somit nicht zu einer Verfälschung des Messergebnisses.

Bei der Herstellung des Kraftsensors ist vorzugsweise die Krafteinwirkung zur elastischen Verformung des Gehäuses senkrecht zu einer Oberfläche der Trägerplatte gerichtet. Da die zu messende Kraft parallel zur Oberfläche der Trägerplatte gerichtet ist, findet durch diese - selbst bei großer Überlastung - keine Aufweitung des Hohlraums quer zur Trägerplatte statt. Somit erzielt man eine stets zuverlässige Befestigung der Trägerplatte im Gehäuse.

Nachfolgend werden die vorliegende Erfindung und deren Vorteile unter Bezugnahme auf die in den Figuren dargestellten Ausführungsbeispiele näher erläutert.
- Figur 1: ist eine schematische Darstellung eines Ackerschleppers mit einem Pflug, der an einem hinteren Hubwerk gehalten ist, und mit einer Kraftmessvorrichtung, die an einem Lager des Unterlenkers eine Schub- oder Zugkraft erfasst,
- Figur 2: zeigt einen Schnitt im Bereich des Lagers des Unterlenkers entlang der Schnittlinie A - A mit einem in die Lagerbohrungen an den Befestigungsschenkeln eingesetzten Kraftmessbolzen und einem darin gehaltenen Messwandlereinsatz gemäß einer ersten Ausführungsform der vorliegenden Erfindung,
- Figur 3A: zeigt einen Messwandlereinsatz, wie er in dem in Figur 2 dargestellten Kraftmessbolzen zum Einsatz kommt,
- Figur 3B: zeigt einen Schnitt durch den Kraftmessbolzen entlang der Linie C - C in Figur 2 in vergrößerter Darstellung,
- Figur 4: veranschaulicht die Befestigung der Trägerplatte bei der Herstellung des Kraftmessbolzens anhand eines schematischen Querschnitts durch den Kraftmessbolzen,
- Figur 5: zeigt einen zu der Darstellung in Figur 2 vergleichbaren Schnitt, bei dem gemäß einer zweiten Ausführungsform der vorliegenden Erfindung die Trägerplatte des Messwandlereinsatzes im Bereich einer Schermesszone tailliert gestaltet ist, und
- Figur 6: zeigt wiederum einen zu der Darstellung in Figur 2 vergleichbaren Schnitt, bei dem gemäß einer dritten Ausführungsform der vorliegenden Erfindung auf einer Trägerplatte des Messwandlereinsatzes Scherspannungen in zwei Schermesszonen erfassbar sind.

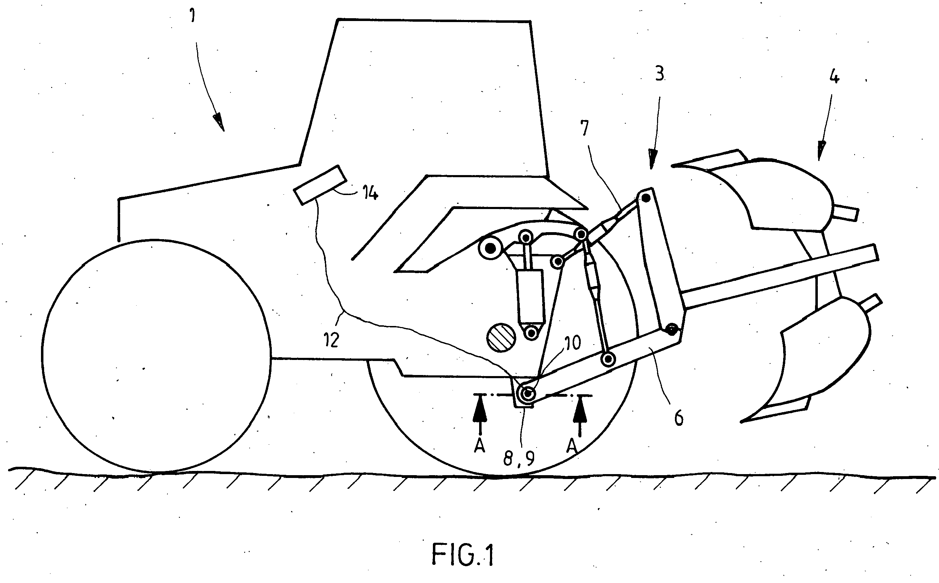

Die Figur 1 zeigt in schematischer Darstellung einen Ackerschlepper 1, an dessen Rückseite ein Hubwerk 3 mit einem Pflug 4 gehalten ist. Das Hubwerk 3 stützt sich über verschiedene Lenker an der Rückseite des Ackerschleppers 1 ab. Von diesen Lenkern sind in der Figur 1 ein Unterlenker 6 und ein Oberlenker 7 dargestellt. Der Unterlenker 6 ist an zwei Befestigungsschenkeln 8, 9 des Ackerschleppers 1 gehalten. An dem Unterlenker 6 ist ein Anbaugerät wie der Pflug 4 gehalten. Der Unterlenker 6 ist durch einen Gelenkbolzen 10 an den Befestigungsschenkeln 8 und 9 befestigt. Der Gelenkbolzen 10 ist mit einer Kraftmesseinrichtung versehen, durch die eine Schub- oder Zugkraft am Unterlenker 6 erfasst wird. Gelenkbolzen 10 mit integrierter Kraftmesseinrichtung werden auch als Kraftmessbolzen bezeichnet. Über eine Signalleitung 12 wird ein der gemessenen Kraft entsprechendes Signal einem Steuergerät 14 übermittelt. Das Steuergerät 14 steuert beispielsweise das Hubwerk 3 an, um die Einsenktiefe des Pfluges 4 zu regeln.

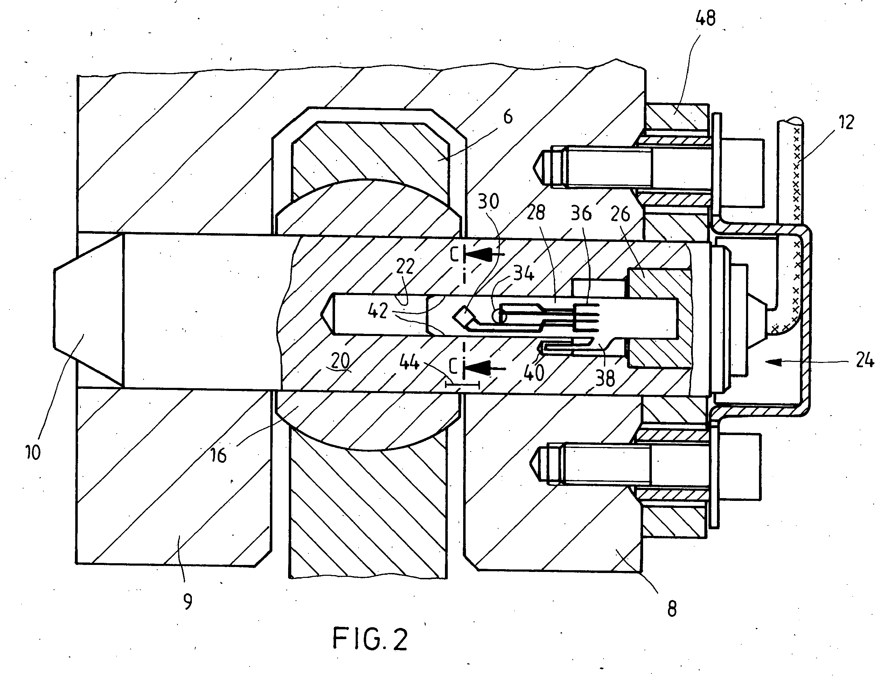

Der Bereich, in dem der Unterlenker 6 an den Befestigungsschenkeln 8 und 9 mittels des Kraftmessbolzens 10 befestigt ist, ist in der Figur 2 in einem Schnitt entlang der Linie A - A genauer dargestellt. Der Kraftmessbolzen 10 ist in Aufnahmebohrungen der Befestigungsschenkel 8 und 9 eingesetzt. Am Kraftmessbolzen 10 ist eine Halterung 48 befestigt. Mittels der Halterung 48 ist der Kraftmessbolzen 10 verdrehsicher und in vorgegebener Einsetztiefe in den Aufnahmebohrungen gehalten. Über eine Kugelbuchse 16 ist der Unterlenker 6 drehbar zwischen den Befestigungsschenkeln 8 und 9 auf dem Kraftmessbolzen 10 gehalten.

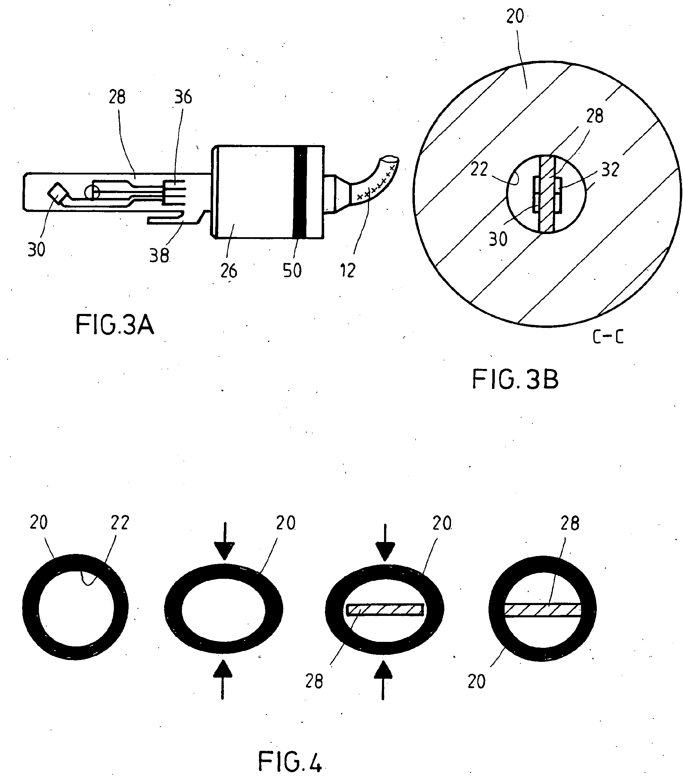

Der Kraftmessbolzen 10 besitzt ein zylinderförmiges Gehäuse 20 in das stirnseitig eine gestufte Sacklochbohrung 22 eingebracht ist. In der Sacklochbohrung 22 ist ein Messwandlereinsatz 24 befestigt. In Figur 3A ist der Messwandlereinsatz 24 alleine dargestellt. Dieser bildet eine vormontierte Baueinheit, die in der Sacklochbohrung 22 des Gehäuses 20 befestigt wird. Der Messwandlereinsatz 24 besitzt einen Stopfen 26 und eine scheibenförmigen Trägerplatte 28, die an den Stopfen 26 in Form einer Zunge angesetzt ist. Ein Dichtring 50, der in einer umlaufenden Ringnut des Stopfens 26 angeordnet ist, dient der Abdichtung der Sacklochbohrung 22. Im Innern des Stopfens 26 ist eine Verstärkerelektronik untergebracht, die auf der Signalleitung 12 ein Messsignal ausgibt. Der Stopfen 26 stützt sich an einer Stufe der Bohrung 22 ab, wie Figur 2 verdeutlicht. Die Trägerplatte 28 steht vom Stopfen 26 ausgehend in die Sacklochbohrung 22 vor. Die Trägerplatte 28 ist parallel zur Mittelachse des Gehäuses 20 angeordnet, und wird in ihrer Längsrichtung von der Mittelachse durchquert. Auf ihrer in Figur 2 dem Betrachter zugewandten Vorderseite ist sie mit einem Dehnmessstreifen 30 versehen. Der Dehnmessstreifen 30 ist in einem Winkel von 45° diagonal zur Mittelachse des Gehäuses ausgerichtet und vollflächig mit der Trägerplatte verklebt. Auf der Rückseite der Trägerplatte 28 ist in gleicher Weise dem Dehnmessstreifen 30 gegenüberliegend ein weiterer Dehnmessstreifen 32 aufgeklebt. Dieser ist zu dem Dehnmessstreifen 30 um 90° gedreht. Die Figur 3B zeigt einen Schnitt durch den Kraftmessbolzen 10 mit eingesetzter Messwandleranordnung 24 entlang der Schnittlinie C - C in Figur 2. Zu erkennen ist die in der Sacklochbohrung 22 mittig befestigte Trägerplatte 28, die beidseitig mit den Dehnmessstreifen 30 und 32 bestückt ist.

Wie Figur 2 oder 3A weiter zeigen, sind die Anschlussdrähte des Dehnmessstreifens 32 über eine Bohrung 34 in der Trägerplatte 28 auf die Vorderseite geführt und zusammen mit den Anschlussdrähten des Dehnmessstreifens 30 mit einem nur schematisch dargestellte Anschlussstecker 36 verbunden. Über den Anschlussstecker 36 sind die Dehnmessstreifen 30 und 32 mit der im Stopfen 26 untergebrachten Verstärkerelektronik verbunden. Die Dehnmessstreifen 30 und 32 sind als Halbbrücke verschaltet. Dies erlaubt die Kompensation von temperaturbedingten Signaländerungen.

Ein Zapfen 38 ist seitlich an der Trägerplatte 28 angesetzt. Dieser greift in die Bohrung 40 ein, die sich ausgehend von einer Stufe in der Sacklochbohrung 22 in das Gehäuse 20 erstreckt. Die Trägerplatte 28 hat die Form einer länglichen, im Wesentlichen rechteckigen Scheibe. In einem dem Stopfen 26 abgewandten Abschnitt ist die Trägerplatte 28 an ihren in Längsrichtung verlaufenden Ränder 42 an der Innenwand der Sacklochbohrung 22 befestigt. Dies trifft insbesondere auf den Bereich zu, in dem die Dehnmessstreife'n 30 und 32 auf die Trägerplatte 28 aufgeklebt sind. Bei dieser Anordnung bildet ein Längsabschnitt des Gehäuses 20, in dem die Dehnmessstreifen 30 und 32 angeordnet sind, einen Erfassungsabschnitt 44, in dem der Kraftmessbolzen 10 für Scherkräfte empfindlich ist. Im Erfassungsabschnitt 44 verursacht eine Scherbeanspruchung des Gehäuses 20 eine Verformung des in diesem Bereichs befestigten Abschnitts der Trägerplatte 28. Die Dehnmessstreifen 30 und 32 erfassen die aus der Scherbeanspruchung resultierende diagonale Längung oder Stauchung der Trägerplatte 28 im Bereich des Erfassungsabschnitts 44.

Durch die Halterung 48 ist sichergestellt, dass die Dehnmessstreifen 30 und 32 und somit der Erfassungsabschnitt 44 in einer Scherzone liegen, in der die Kugelbuchse 16 und der feststehende Befestigungsschenkel 8 bei einer Krafteinwirkung auf den Unterlenker eine Scherbeanspruchung des Kraftmessbolzens 10 verursachen.

Die Trägerplatte 28 befindet sich durch ihre Anordnung auf der Mittelachse des Gehäuses 22 auf einer neutralen Faser hinsichtlich einer Biegebeanspruchung. Biegespannungen werden somit allenfalls sehr abgeschwächt erfasst. Außerdem ist die Drehwinkelausrichtung der Trägerplatte 28 durch die Halterung 48 und den Zapfen 38 festgelegt. Durch die Anordnung der Trägerplatte 28 und der Dehnmessstreifen 30 und 32 werden vor allem parallel zur Oberfläche der Vorder- oder Rückseite der Trägerplatte 28 gerichtete Scherkräfte erfasst. Scherkräfte senkrecht zu dieser Oberfläche äußern sich in einer Längung der Trägerplatte 28 in Längsrichtung und werden durch die Verschaltung der Dehnmessstreifen 30 und 32 als Halbbrücke kompensiert.

Die Vorder- und Rückseite der Trägerplatte 28 sind bei einem Einsatz am Ackerschlepper 1 üblicherweise parallel zu einer Horizontalen ausgerichtet, um die vom Anbaugerät in horizontaler Richtung auf den Kraftmessbolzen 10 einwirkenden Zugkräfte möglichst effizient zu messen.

Anhand von Figur 4 wird nun die Befestigung der Trägerplatte 28 in der Sacklochbohrung 22 des Gehäuses 20 beschrieben. Es sind von links nach rechts die Teilschritte des Befestigungsvorgangs dargestellt. Die Trägerplatte 28 hat in ihrer Breite ein geringes Übermaß gegenüber dem Innendurchmesser der Sacklochbohrung 22. Durch Ausüben einer Presskraft in einer Richtung senkrecht zur Vorder- bzw. Rückseite der Trägerplatte 28 wird das Gehäuse 20 elastisch zu einem Oval verformt. Dadurch weitet sich die Sacklochbohrung 22 in Richtung der Breite der Trägerplatte 28 auf. Der Messwandlereinsatz 24 wird mit der Trägerplatte 28 voran in das verformte Gehäuse eingesetzt. Danach wird das Gehäuse 20 entlastet und kehrt in die ursprüngliche, kreisrunde Form zurück. Dadurch wird die Trägerplatte 28 in der Sacklochbohrung 22 zwischen gegenüberliegenden Innenwänden eingeklemmt. Diese Befestigung erlaubt die zuverlässige Übertragung von Scherkräften, also Schub- oder Zugspannungen vom Gehäuse 20 auf die Trägerplatte 28. Alternativ könnte die Trägerplatte 28 an ihren Längsrändern 42 auch mit der Innenwand der Sacklochbohrung 22 verschweißt, verlötet oder verklebt werden. Dies bedingt jedoch einen höheren Herstellungsaufwand.

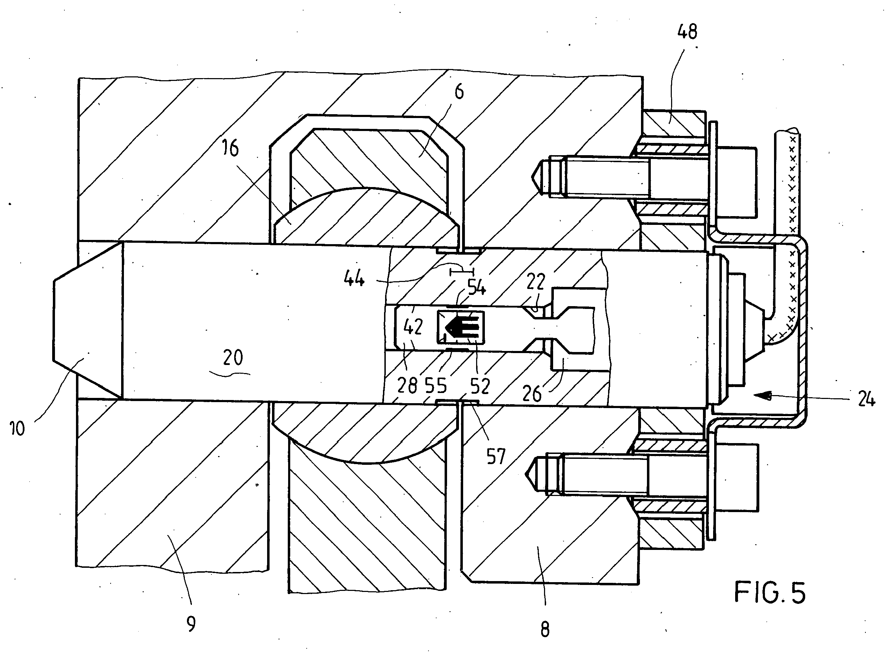

Anhand einer in Figur 5 dargestellten zweiten Ausführungsform der vorliegenden Erfindung werden vorteilhafte Modifikationen des erfindungsgemäßen Kraftrüessbolzens 10 beschrieben. Diese können jeweils für sich oder auch in Kombination Verwendung finden. Der grundsätzliche Aufbau entspricht dem der ersten Ausführungsform.

Auf der Vorderseite und der Rückseite der Trägerplatte 28 sind gemäß der zweiten Ausführungsform jeweils zwei Dehnmessstreifen angeordnet. Diese sind gegeneinander um 90° verdreht ausgerichtet. Mit der Mittelachse des Gehäuses 20 schließen die Dehnmessstreifen jeweils einen Winkel von 45° ein. In dem dargestellten Ausführungsbeispiel sind die zwei Dehrimessstreifen zusammen auf einem Dehnmesselement 52 bereits senkrecht zueinander angeordnet. Dieses ist auf die Oberfläche der Vorderseite der Trägerplatte 28 aufgeklebt. Ein entsprechendes Dehnmesselement ist auch auf der Rückseite der Trägerplatte, dem Dehnmesselement 52 gegenüberliegend angebracht. Die insgesamt vier Dehnmessstreifen sind in einer Vollbrücke verschaltet. Dadurch können neben temperaturbedingten Signalen auch auf den Kraftmessbolzen 10 einwirkende Torsionsspannungen kompensiert werden.

Eine weitere Modifikation betrifft die Form der Trägerplatte 28. Diese ist an ihren Längsrändern 42 jeweils mit einer Einbuchtung 54 und 55 versehen. Dadurch ist zwischen der Innenwand der Sacklochbohrung 22 und der Trägerplatte 28 jeweils ein Spalt gebildet. Die Einbuchtungen 54 und 55 sind gegenüberliegend im Bereich des Erfassungsabschnitts 44 vorgesehen. Die Trägerplatte 28 ist also in diesem Bereich verjüngt. Die Dehnmessstreifen sind innerhalb des verjüngten Längsabschnitts der Trägerplatte 28 angeordnet. Durch die Verjüngung ergibt sich eine verbesserte Einkopplung von Scherkräften in die Trägerplatte 28. Die Breite des Erfassungsabschnitts 44 kann durch die Länge der Einbuchtungen 54 und 55 eingestellt werden. Insbesondere wird eine durch Scherkräfte verursachte diagonale Längung oder Stauchung auf den verjüngten Längsabschnitt der Trägerplatte 28 konzentriert. Somit ist der Ort für eine optimale Erfassung der Scherkräfte konstruktiv festgelegt. Die Dehnmessstreifen können daher mit geringem Aufwand optimal platziert werden. Zudem bewirken die Einbuchtungen 54 und 55, dass die Messanordnung aus dem Gehäuse 20 und dem Messwandlereinsatz 24 gegenüber einer leichten Verschiebung der Trägerplatte 28 in Längsrichtung tolerant ist.

Eine ähnliche Auswirkung hat die Ringnut 57, die umlaufend an der Außenseite des Gehäuses 20 gebildet ist. Sie bewirkt eine Konzentration von Scherkräften auf den von ihr überdeckten Längsabschnitt des Gehäuses 20. Somit ist der Kraftmessbolzen 10 toleranter gegenüber einer leichten Variation hinsichtlich seiner Einsetztiefe.

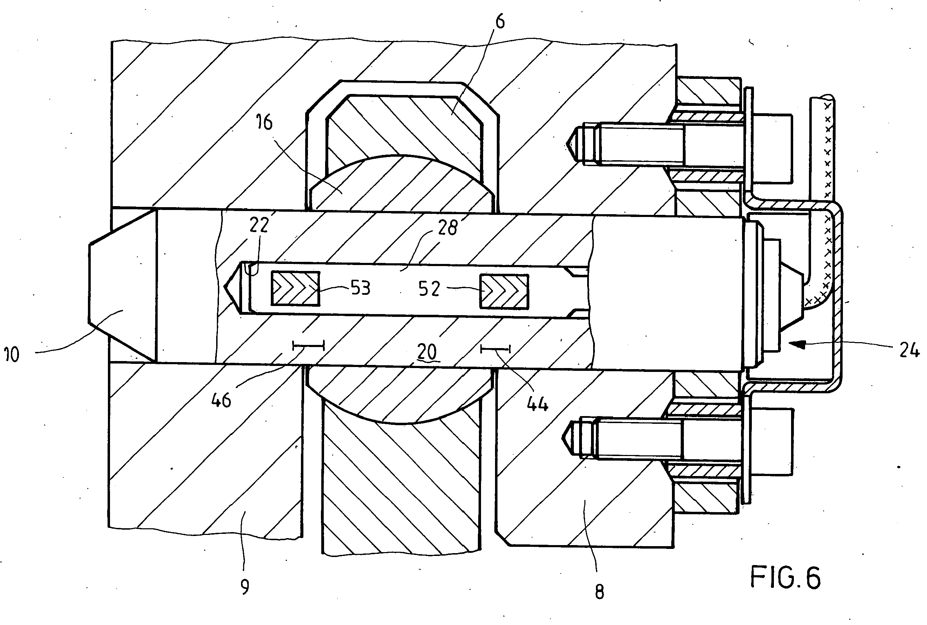

Anhand einer in Figur 6 dargestellten dritten Ausführungsform der vorliegenden Erfindung wird eine weitere Modifikationen des erfindungsgemäßen Kraftmessbolzens 10 beschrieben. Der grundsätzliche Aufbau entspricht dem der ersten Ausführungsform.

Die Sacklochbohrung 22 im Gehäuse 20 ist so lang ausgeführt, dass sie sich auch durch die zwischen der Kugelbuchse 16 und dem Befestigungsschenkel 9 gebildete zweite Scherzone erstreckt. Die Trägerplatte 28 erstreckt sich in Längsrichtung ebenfalls durch beide Scherzonen. Zusätzlich zum Erfassungsabschnitt 44 ist ein weiterer Erfassungsabschnitt 46 gebildet, in dem der Kraftmessbolzen 10 Scherkräfte erfassen kann. Im Erfassungsabschnitt 44 trägt die Trägerplatte 28 das Dehnmesselement 52. In dem Erfassungsabschnitt 46 ist auf der Trägerplatte 28 ein weiteres Dehnmesselement 53 befestigt. Auf beiden Dehnmesselementen 52 und 53 sind zwei' zueinander senkrecht angeordnete Dehnmessstreifen integriert. Die insgesamt vier in den zwei Dehnmesselementen 52, 53 enthaltenen Dehnmessstreifen sind zu einer Vollbrücke verschaltet. Die Verschaltung ist so ausgeführt, dass sich in den Erfassungsabschnitten 44 und 46 erfasste gleichsinnige Scherkräfte im Ausgangssignal der Vollbrücke addieren.

Die vom Unterlenker 6 auf den Kraftmessbolzen 10 ausgeübte Kraft kommt üblicherweise jeweils zur Hälfte an den Befestigungsschenkeln 8 und 9 zur Anlage. Diese Verteilung kann sich jedoch bei asymmetrischen Verschleiß der Aufnahmebohrungen und des Kraftmessbolzens 10 ändern. Infolgedessen können die in den beiden Scherzonen auftretenden Scherkräfte voneinander abweichen. Durch eine Erfassung der Summe der in beiden Erfässungsabschnitten 44 und 46 einwirkenden Scherkräfte lässt sich die am Unterlenker 6 angreifende Zug- oder Schubkraft sehr genau und zuverlässig bestimmen.

Die Modifikationen der zweiten Ausführungsform, insbesondere die Verjüngung der Trägerplatte 28 im jeweiligen Erfassungsabschnitt, lassen sich ohne weiteres auch bei der dritten Ausführungsform anwenden.

### Bezugszeichenliste

- 1: Ackerschlepper
- 3: Hubwerk
- 4: Pflug
- 6: Unterlenker
- 7: Oberlenker
- 8: Befestigungsschenkel
- 9: Befestigungsschenkel
- 10: Kraftmessbolzen
- 12: Signalleitung
- 14: Steuergerät
- 16: Kugelbuchse
- 20: Gehäuse
- 22: Sacklochbohrung
- 24: Messwandlereinsatz
- 26: Stopfen
- 28: Trägerplatte
- 30: Dehnmessstreifen
- 32: Dehnmessstreifen
- 34: Bohrung
- 36: Anschlussstecker
- 38: Zapfen
- 40: Bohrung
- 42: Längsrand
- 44: Erfassungsabschnitt
- 46: Erfassungsabschnitt
- 48: Halterung
- 50: Dichtring
- 52: Dehnmesselement
- 53: Dehnmesselement
- 54: Einbuchtung
- 55: Einbuchtung
- 57: Ringnut

## Patentansprüche

1. Kraftsensor mit einem zylinderförmigen Gehäuse (20), das durch eine senkrecht zu seiner Mittelachse auf es einwirkende Kraft elastisch verformbar ist und das einen Hohlraum (22) aufweist, und mit einer in dem Hohlraum (22) angeordneten Messwandleranordnung (24), mit der die Verformung des Gehäuses (20) erfassbar ist,
**dadurch gekennzeichnet, dass**
die Messwandleranordnung (24) eine scheibenförmige Trägerplatte (28) und einen auf einer Oberfläche der Trägerplatte (28) befestigten Dehnmesswandler (30, 32; 52; 53) aufweist und
dass die Trägerplatte (28) so im Hohlraum (22) befestigt ist, dass sich eine Verformung des Gehäuses (20) auf die Trägerplatte (28) überträgt.

2. Kraftsensor nach Anspruch 1, **dadurch gekennzeichnet, dass** die Trägerplatte (28) einen Rand (42) aufweist, an dem sie kraftschlüssig und/oder formschlüssig mit einer Innenwand des Hohlraums (22) verbunden ist.

3. Kraftsensor nach Anspruch 1 oder 2, **dadurch gekennzeichnet, dass** die Trägerplatte (28) im Hohlraum (22) zwischen gegenüberliegenden Abschnitten der Innenwand eingeklemmt ist.

4. Kraftsensor nach Anspruch 1 oder 2, **dadurch gekennzeichnet, dass** ein Randabschnitt der Trägerplatte (28) mit der Innenwand des Hohlraums (22) verklebt, verlötet oder verschweißt ist.

5. Kraftsensor nach einem der vorhergehenden Ansprüche, **dadurch gekennzeichnet, dass** die Oberfläche der Trägerplatte (28) parallel zu der Mittelachse des Gehäuses (20) ausgerichtet ist und die Mittelachse durch stirnseitige Randflächen der Trägerplatte (28) verläuft.

6. Kraftsensor nach einem der vorhergehenden Ansprüche, **dadurch gekennzeichnet, dass** der Dehnmesswandler (30, 32; 52, 53) in einem Winkel von 45° zur Mittelachse des zylinderförmigen Gehäuses (20) angeordnet ist.

7. Kraftsensor nach einem der vorhergehenden Ansprüche, **dadurch gekennzeichnet, dass** der Dehnmesswandler (30, 32; 52, 53) im Bereich einer hinsichtlich einer Biegung des Gehäuses (20) neutralen Faser gehalten ist.

8. Kraftsensor nach einem der vorhergehenden Ansprüche, **dadurch gekennzeichnet, dass** durch einen Zapfen (38) an der Trägerplatte (28) und durch eine den Zapfen (38) aufnehmende Ausbuchtung (40) im Gehäuse (20) eine Winkellage der Trägerplatte (28) im Gehäuse (20) eindeutig vorgegeben ist.

9. Kraftsensor nach einem der vorhergehenden Ansprüche, **dadurch gekennzeichnet, dass** der Hohlraum (22) die Form einer von einer Seitenfläche des zylinderförmigen Gehäuses (20) ausgehenden, entlang der Mittelachse ausgeführten Sacklochbohrung (22) oder Durchgangsbohrung aufweist.

10. Kraftsensor nach Anspruch 9, **dadurch gekennzeichnet, dass** die Messwandleranordnung (24) einen Stopfen (26) zum Einsetzen in die Sacklochbohrung (22) oder Durchgangsbohrung aufweist, an dem die Trägerplatte (28) in Form einer vorstehenden Zunge angesetzt ist.

11. Kraftsensor nach Anspruch 10, **dadurch gekennzeichnet, dass** in dem Stopfen (26) eine Elektronik zur Auswertung eines Signals des Dehnmesswandlers (30, 32; 52, 53) angeordnet ist.

12. Kraftsensor nach Anspruch 10 oder 11, **dadurch gekennzeichnet, dass** am Stopfen (26) oder durch eine Stufe in der Sacklochbohrung (22) oder Durchgangsbohrung ein Anschlag hinsichtlich der Einsetztiefe des Stopfens (26) bzw. der Trägerplatte (28) gebildet ist.

13. Kraftsensor nach einem der Ansprüche 9 bis 12, **dadurch gekennzeichnet, dass** die Trägerplatte (28) im wesentlichen die Form einer rechteckigen Scheibe aufweist und an ihren parallel zur Mittelachse des Gehäuses (20) verlaufenden Längskanten (42) mit der Innenwand der Sacklochbohrung (22) bzw. mit der Innenwand der Durchgangsbohrung verbunden ist.

14. Kraftsensor nach Anspruch 13, **dadurch gekennzeichnet, dass** die Trägerplatte (28) in einem Bereich, in dem der Dehnmesswandler (52) angeordnet ist, eine Verjüngung (54, 55) in ihrer Breite aufweist, und dass im Bereich der Verjüngung (54, 55) ein Spalt zwischen den Längskanten (42) und der Innenwand der Sacklochbohrung (22) bzw. der Innenwand der Durchgangsbohrung besteht.

15. Kraftsensor nach einem der Ansprüche 1 bis 14, **dadurch gekennzeichnet, dass** innerhalb einer Schermesszone (44) der Trägerplatte (28) zwei nach Art einer Halbbrücke verschaltete Dehnmessstreifen (30, 32) senkrecht zueinander angeordnet sind.

16. Kraftsensor nach einem der Ansprüche 1 bis 14, **dadurch gekennzeichnet, dass** innerhalb einer Schermesszone (44) der Trägerplatte (28) vier nach Art einer Vollbrücke verschaltete Dehnmessstreifen (52) paarweise auf gegenüberliegenden Oberflächen der Trägerplatte (28) senkrecht zueinander angeordnet sind.

17. Kraftsensor nach einem der Ansprüche 1 bis 14, **dadurch gekennzeichnet, dass** innerhalb zweier in Längsrichtung des Gehäuses (20) beabstandeter Schermesszonen (44, 46) jeweils zwei Dehnmessstreifen senkrecht zueinander angeordnet sind, und dass diese vier Dehnmessstreifen (52, 53) in einer Vollbrücke so verschaltet sind, dass sich in den zwei Schermesszonen (44, 46) erfasste Scherkräfte addieren, sofern sie gleichgerichtet sind.

18. Herstellungsverfahren für einen Kraftsensor (10) mit einem zylinderförmigen Gehäuse (20) nach einem der vorhergehenden Ansprüche, bei dem die Trägerplatte (28) mit Übermaß zu dem Hohlraum (22) angefertigt wird, und bei dem die Trägerplatte (28) in dem Hohlraum (22) dadurch befestigt wird, dass
der Hohlraum (22) in einer Richtung senkrecht zur Mittelachse des Gehäuses (20) durch äußere Krafteinwirkung elastisch aufgeweitet wird,
dass die Trägerplatte (28) in den aufgeweiteten Hohlraum eingesetzt wird und
dass bei Entspannung des Hohlraums (22) die Trägerplatte (28) im Hohlraum (22) eingeklemmt wird.

19. Herstellungsverfahren nach Anspruch 18, **dadurch gekennzeichnet, dass** die Krafteinwirkung zur elastischen Verformung beim Herstellungsprozess senkrecht zu einer Oberfläche der Trägerplatte (28) gerichtet ist.
